# EUROPÄISCHE PATENTSCHRIFT

(11) **EP 2 974 994 B1**
(45) Veröffentlichungstag und Bekanntmachung des Hinweises auf die Patenterteilung: **13.03.2019**
(21) Anmeldenummer: 15002092.3
(22) Anmeldetag: 14.07.2015
(51) Int. Cl.: B66C 23/44, B60P 1/54

(54) **MONTAGEVORRICHTUNG**
MOUNTING DEVICE
DISPOSITIF DE MONTAGE

(30) Priorität: 16.07.2014 AT 2872014 U
(43) Veröffentlichungstag der Anmeldung: 20.01.2016
(73) Patentinhaber: Palfinger AG, 5020 Salzburg (AT)
(72) Erfinder: Juen, Thomas, 5431 Kuchl (AT); Pichorner, Gernot, 9861 Krems in Kärnten (AT)
(74) Vertreter: Torggler & Hofinger Patentanwälte

(56) Entgegenhaltungen:
- EP-A1- 0 685 361
- AT-B- 353 442
- NL-A- 7 702 392
- US-A- 2 841 404
- US-A1- 2007 235 403

## Beschreibung

Die vorliegende Erfindung betrifft eine Montagevorrichtung für eine Abstützung eines Ladekrans oder einen Ladekran mit den Merkmalen des Oberbegriffs des Anspruchs 1 und ein Kraftfahrzeug mit den Merkmalen des Oberbegriffs des Anspruchs 10.

Bei gattungsgemäßen Montagevorrichtungen wird ein Hilfsrahmen auf die Fahrgestelllängsträger aufgesetzt. Die Querstreben der Montagevorrichtung werden am Hilfsrahmen befestigt. Es ergibt sich eine ungünstige Erhöhung der Ladekante.

Eine gattungsgemäße Montagevorrichtung geht aus der US 2007/235403 A1 hervor.

Aufgabe der Erfindung ist die Bereitstellung einer Montagevorrichtung und eines Kraftfahrfahrzeuges mit einer solchen Montagevorrichtung, wobei sich im Montagezustand eine möglichst niedrige Ladekante ergibt.

Diese Aufgabe wird durch eine Montagevorrichtung mit den Merkmalen des Anspruchs 1 und ein Kraftfahrzeug mit den Merkmalen des Anspruchs 10 gelöst.

Bei der erfindungsgemäßen Montagevorrichtung kann der Hilfsrahmen entfallen, sodass eine schweißfreie Montage der Montagevorrichtung am Fahrgestell des Kraftfahrzeuges ermöglicht wird. Es kann die volle Pritschenlänge bei möglichst niedriger Ladekante verwendet werden. Die Abstützung des Ladekrans bzw. der Ladekran mit all seinen Bestandteilen wie Kransäule mit daran angeordneten Kranarmen und Auslegern werden an der Montagevorrichtung angeordnet.

Vorteilhafte Ausführungsformen sind in den abhängigen Ansprüchen definiert.

Ist vorgesehen, dass die wenigstens eine Querstrebe als einen Hohlraum aufweisendes Hohlprofil ausgebildet ist, kann vorgesehen sein, dass im Hohlraum ein Ausleger des an der Montagevorrichtung anzuordnenden Ladekrans verschiebbar gelagert ist.

Bei größeren Kränen werden wenigstens zwei Querstreben vorzusehen sein. Dann kann vorgesehen sein, dass der Hohlraum der einen der wenigstens zwei Querstreben im Bereich der ersten Halteklammer offen ist und der Hohlraum der anderen der wenigstens zwei Querstreben im Bereich der zweiten Halteklammer offen ist. Wiederum können die Querstreben zur Lagerung von Auslegern des an der Montagevorrichtung anzuordnenden Ladekranes verwenden werden. Die Notwendigkeit gesonderter Führungen für den bzw. die Ausleger entfällt, wodurch sich gegenüber dem Stand der Technik eine vereinfachte Bauweise ergibt.

Bei diesem Ausführungsbeispiel stellt bzw. stellen die Querstrebe(n) sozusagen Teil(e) des Ladekranes selbst dar.

Anders betrachtet, kann bei einem Kraftfahrzeug mit einer Montagevorrichtung nach diesem Ausführungsbeispiel mit daran angeordnetem Ladekran der in Form von einer, zwei oder mehrerer Querstreben ausgebildete Unterteil der Krankonstruktion als kraft- und momentübertragender Teil der Montagevorrichtung betrachtet werden.

Die Fahrgestelllängsträger können parallel zueinander verlaufen oder Kröpfungen aufweisen. Die Halteklammern sind bevorzugt in den parallel verlaufenden Abschnitten anzuordnen.

Bevorzugt kann vorgesehen sein, dass an der wenigstens einen Querstrebe zumindest eine Aufnahmeplatte für eine Kransäule des Ladekrans angeordnet ist. Hierdurch ergibt sich eine noch stärkere Integration von Ladekran und Montagevorrichtung, da auf ein gesondertes Bauteil zur Lagerung der Kransäule an der Montagevorrichtung verzichtet werden kann. Es können auch zwei Aufnahmeplatten - zum Beispiel zur wahlweisen Montage des Ladekrans an der einen oder anderen Aufnahmeplatte - vorgesehen sein. Zum Beispiel könnte eine der Aufnahmeplatten zentral und die andere Aufnahmeplatte randseitig der Montagevorrichtung angeordnet sein.

Zur leichteren Befestigung der Halteklammern an den Fahrgestelllängsträgern kann vorgesehen sein, dass die erste und die zweite Halteklammer jeweils einen Oberteil und einen damit verbundenen Unterteil aufweisen. Hierdurch ergibt sich eine einfache Montage: Oberteile können auf die Fahrgestelllängsträger aufgelegt werden. Anschließend werden die Unterteile mit den Oberteilen verbunden und umgreifen so die Fahrgestelllängsträger. Die Ober- und Unterteile können zum Beispiel miteinander verschraubt werden.

Eine Verbindung der Ober -und Unterteile kann zum Beispiel so erfolgen, dass die Oberteile und die Unterteile der ersten und der zweiten Halteklammer an jenen Seiten der ersten und der zweiten Halteklammer miteinander verbunden sind, die voneinander abgewandt sind.

Alternativ oder zusätzlich kann vorgesehen sein, dass die Oberteile und die Unterteile der ersten und der zweiten Halteklammer an jenen Seiten der ersten und der zweiten Halteklammer miteinander verbunden sind, die einander zugewandt sind.

Besonders bevorzugt ist vorgesehen, dass die wenigstens eine Querstrebe über eine lösbare Verbindung, vorzugsweise eine Klemmverbindung, an der ersten und der zweiten Halteklammer befestigt ist. Hierdurch ergibt sich ein modularer Aufbau der Montagevorrichtung, mit einer einfachen Anpassbarkeit an unterschiedliche Fahrgestellgeometrien. Es ergibt sich außerdem ein geringeres Packmaß bei einem Versand der Montagevorrichtung.

Bei einem erfindungsgemäßen Kraftfahrzeug ist besonders bevorzugt vorgesehen, dass die Höhe der Halteklammern im Wesentlichen der Höhe der Fahrgestelllängsträgern entspricht. Die Montagevorrichtung baut nicht zusätzlich auf dem Fahrgestell auf.

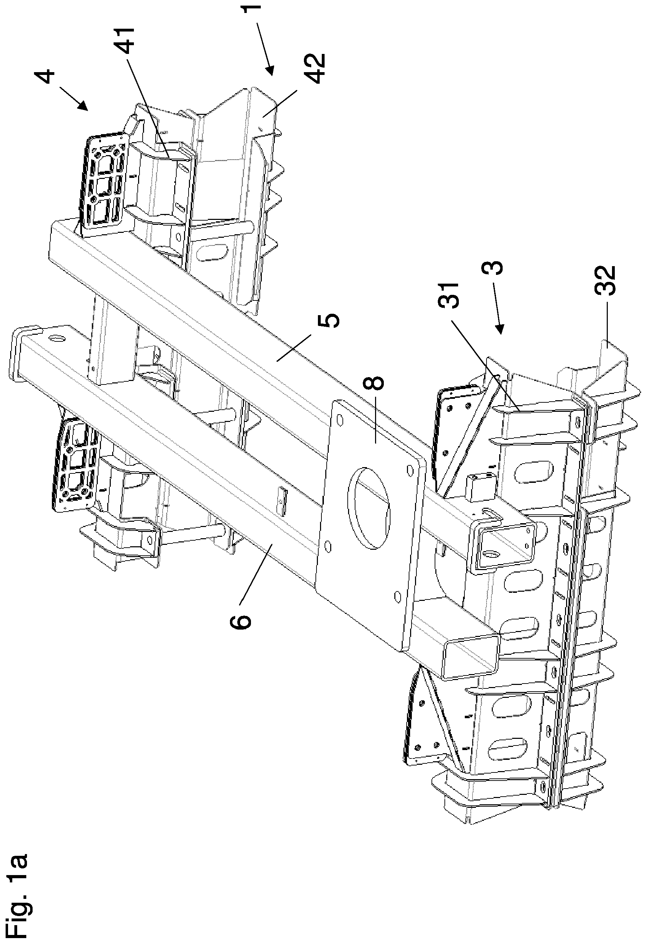

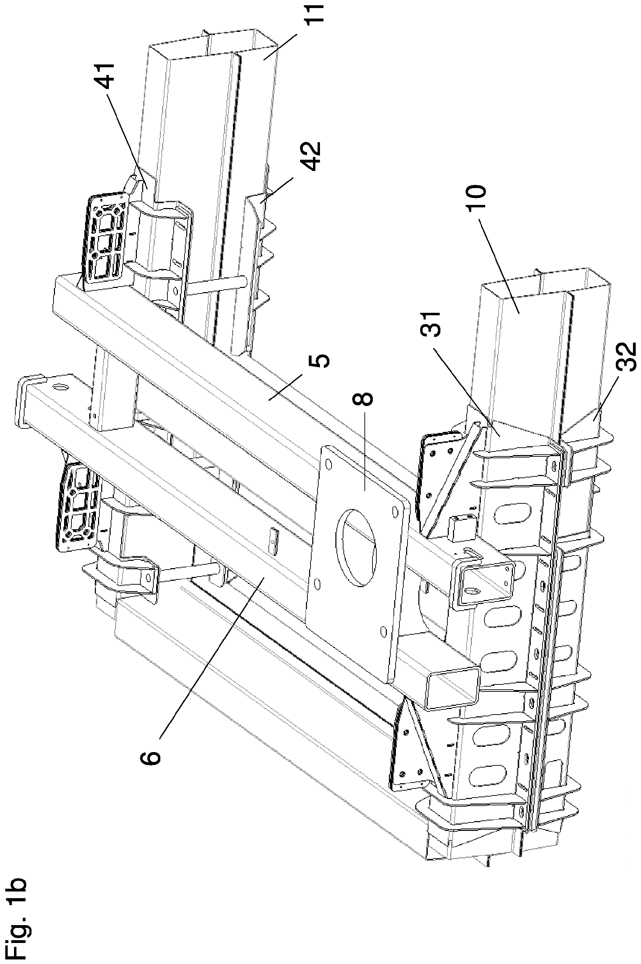

Weitere Vorteile und Einzelheiten der Erfindung ergeben sich anhand der Figuren 1 bis 9. Jede Figur weist Unterfiguren a und b auf. Die Unterfiguren a beziehen sich jeweils auf die Montagevorrichtung in einem isolierten Zustand und die Unterfiguren b auf die Montagevorrichtung im Montagezustand an den Fahrgestelllängsträgern.

Figur 1a zeigt eine perspektivische Ansicht einer erfindungsgemäßen Montagevorrichtung 1. Es sind eine erste Haltklammer 3 und eine zweite Halteklammer 4 vorgesehen, die parallel zueinander verlaufen und durch zwei quer zu den Halteklammern 3, 4 verlaufende Querstreben 5, 6 miteinander verbunden sind. Im Montagezustand (Figur 1b) umgreifen die Halteklammern 3, 4 einen ersten Fahrgestelllängsträger 10 und einen zweiten Fahrgestelllängsträger 11, die in diesem Ausführungsbeispiel ohne Kröpfung parallel zueinander verlaufen.

Die hier zwei Querstreben 5, 6 sind in diesem Ausführungsbeispiel als Hohlräume aufweisende Hohlprofile ausgebildet. Der Hohlraum der einen der zwei Querstreben 5, 6 ist im Bereich der ersten Halteklammer 3 offen und der Hohlraum der anderen der zwei Querstreben 5, 6 ist im Bereich der zweiten Halteklammer 4 offen. Daher können die Querstreben 5, 6 für die verschiebbare Lagerung von Auslegerverbreiterungen verwendet werden. Erkennbar sind in
Figur 1 die Oberteile 31, 41 und die Unterteile 32, 42 der Halteklammern 3, 4. Diese sind im vorliegenden Ausführungsbeispiel sowohl an jenen Seiten der ersten und der zweiten Halteklammer 3, 4 miteinander verbunden, die voneinander abgewandt sind, als auch an jenen Seiten, die voneinander abgewandt sind. Die Verbindung erfolgt im vorliegenden Ausführungsbeispiel in Form von Schraubverbindungen (siehe zum Beispiel die Figuren 5 und 6) 12, 13. Diese haben nur eine kraftschlüssige Funktion, es kommt also zu keinem Verschrauben der Montagevorrichtung 1 mit dem Fahrgestell. Erkennbar ist auch eine Aufnahmeplatte 8 für eine Kransäule eines Ladekranes 2.

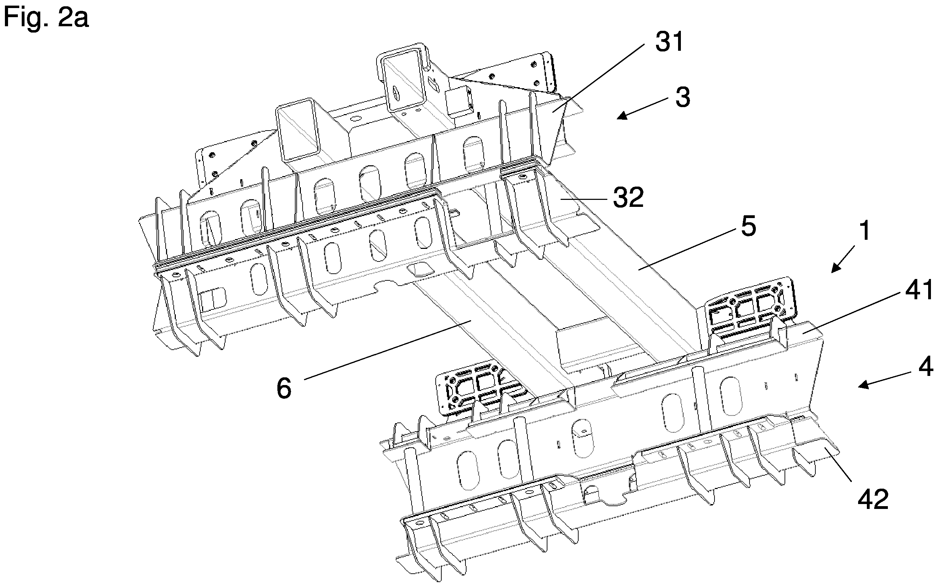

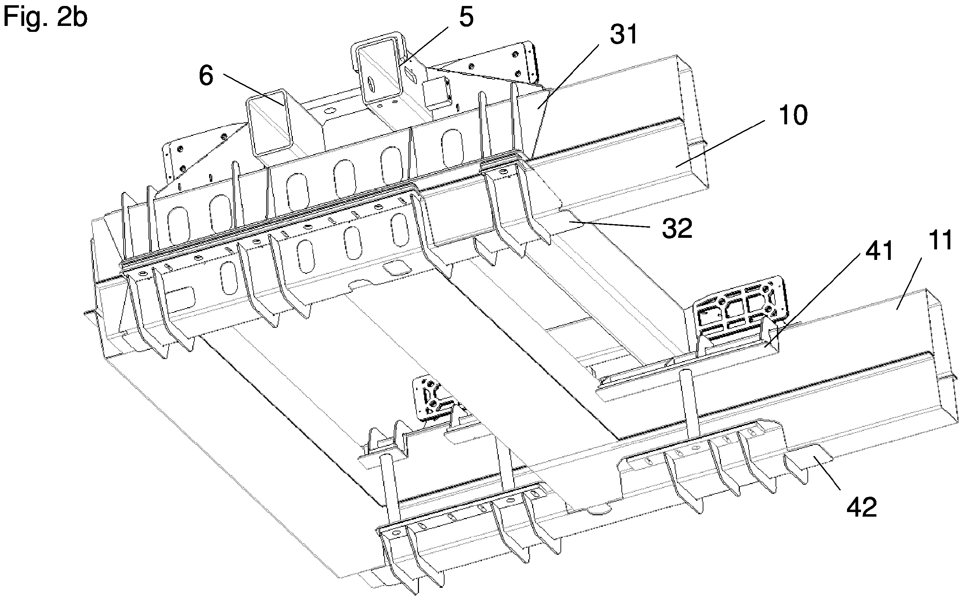

Figur 2 zeigt eine perspektivische Ansicht von unten.

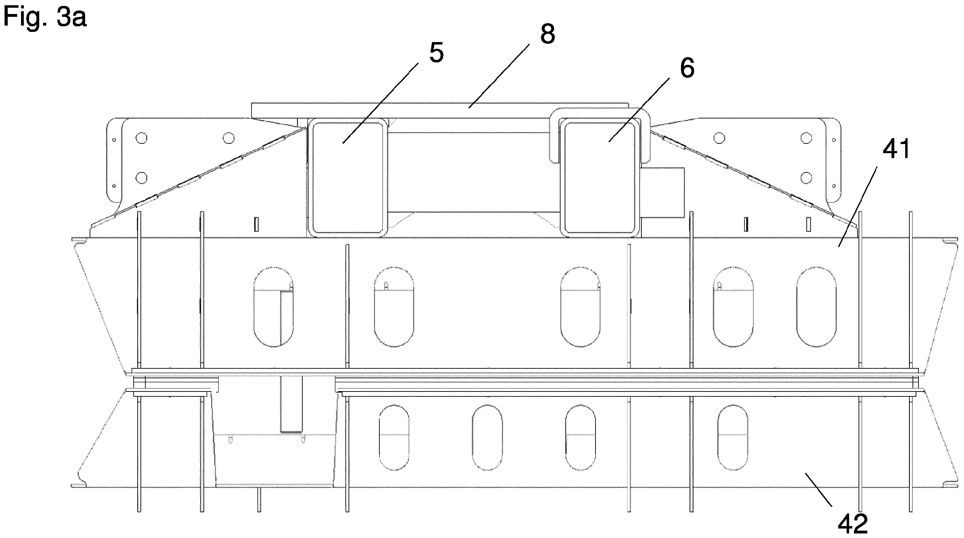

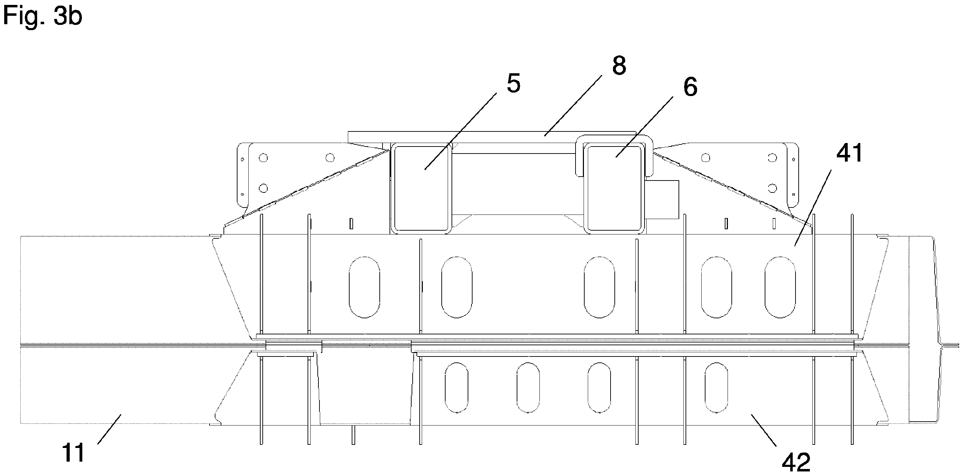

Figur 3 zeigt eine Draufsicht auf die Halteklammer 4.

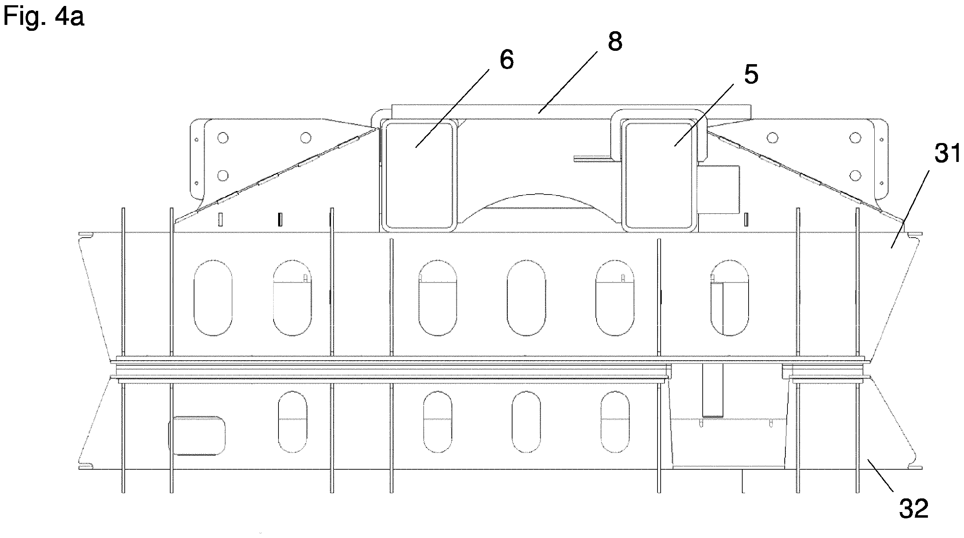

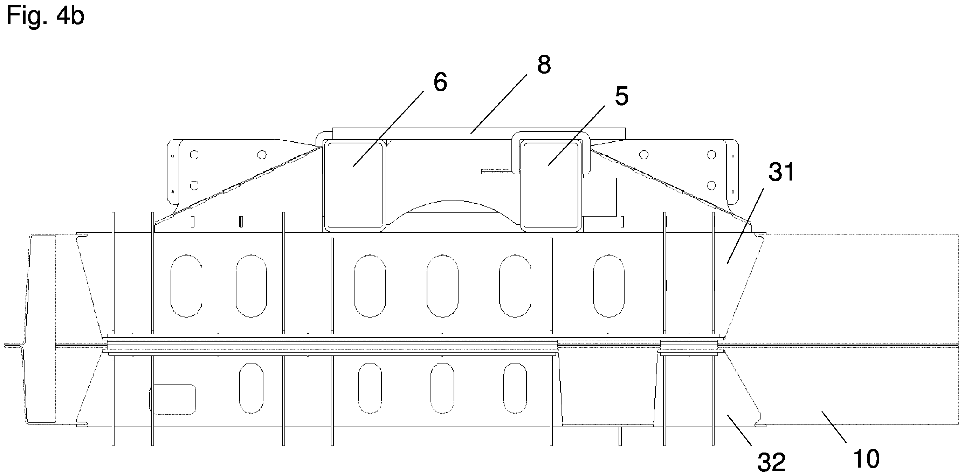

Figur 4 zeigt eine Draufsicht auf die Halteklammer 3.

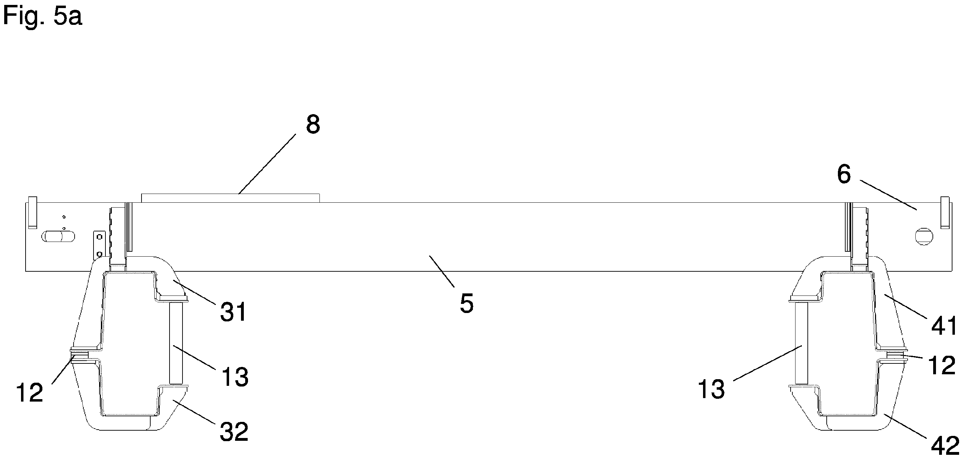

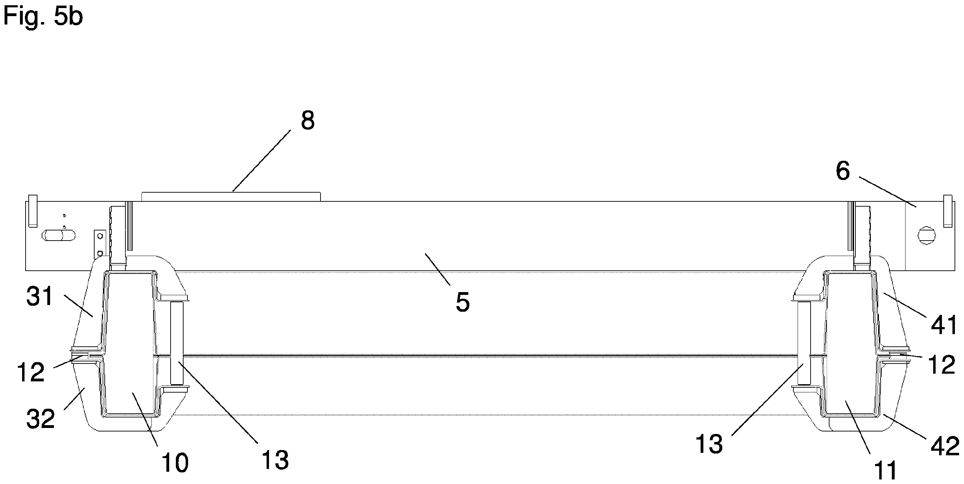

Figur 5 zeigt eine Draufsicht auf die erste Querstrebe 5.

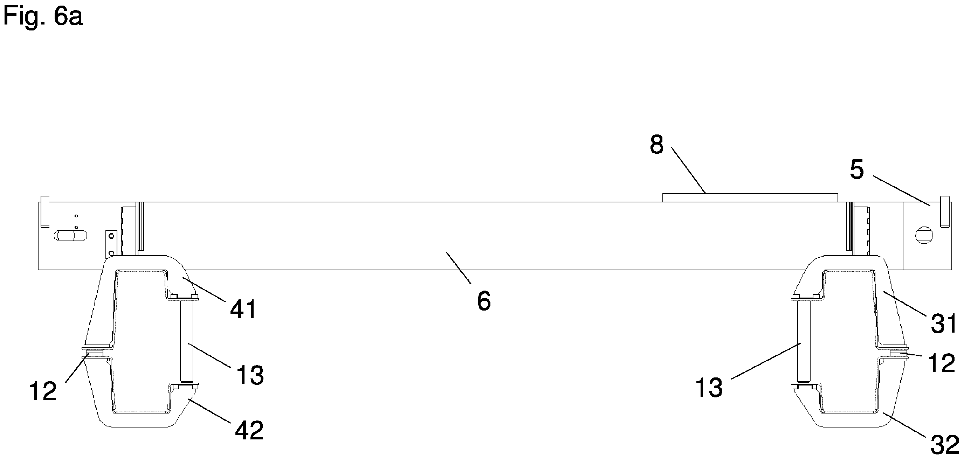

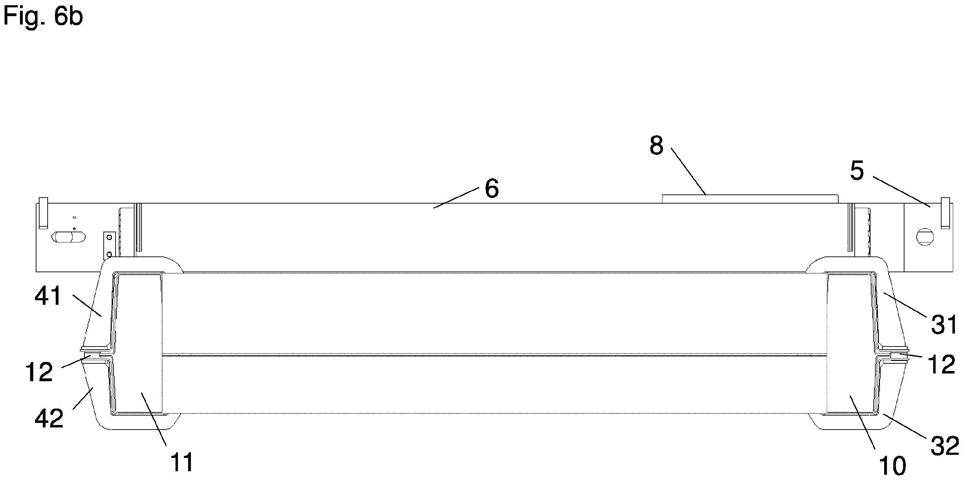

Figur 6 zeigt eine Draufsicht auf die zweite Querstrebe 6.

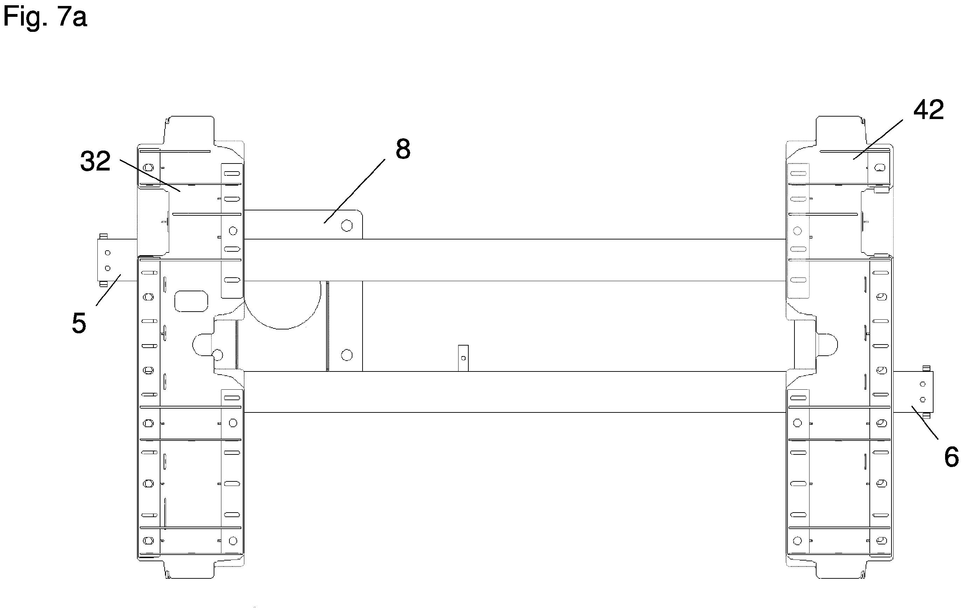

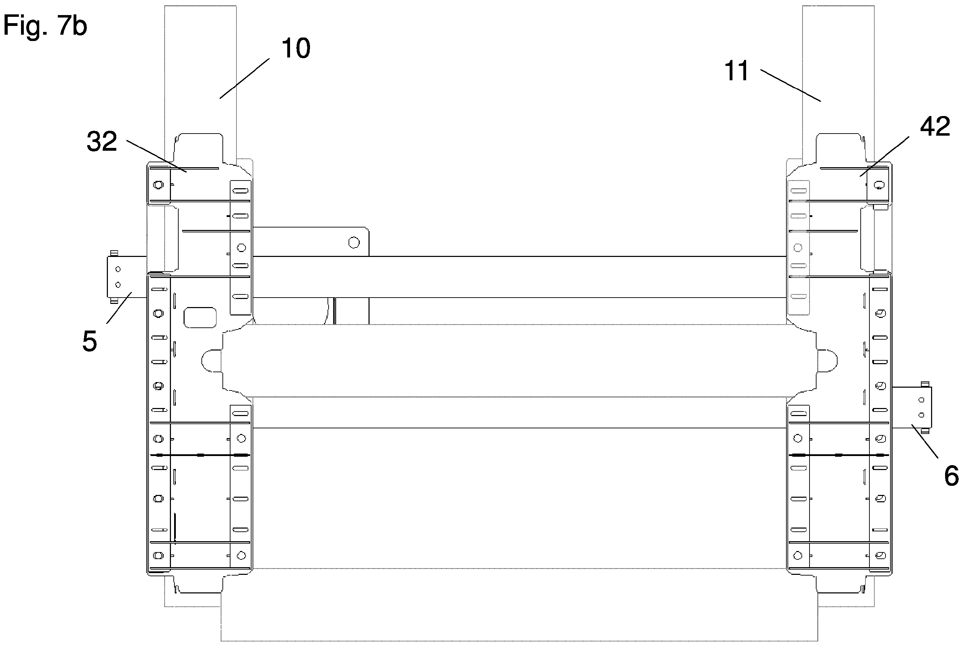

Figur 7 zeigt eine Draufsicht von unten.

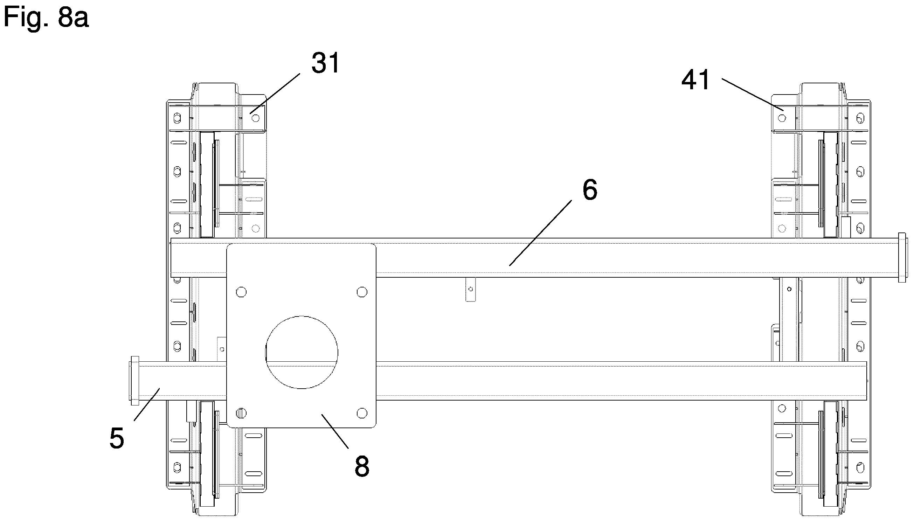

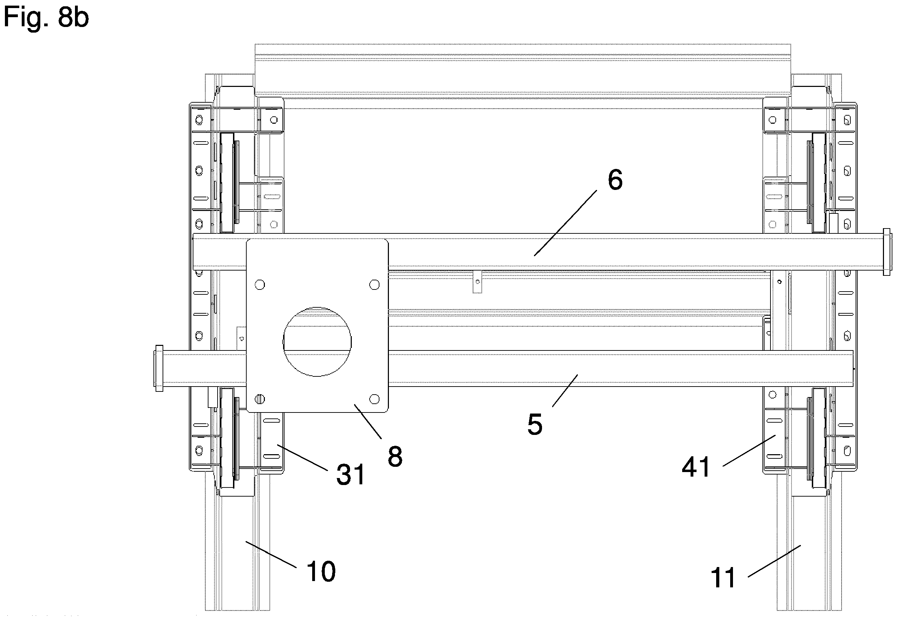

Figur 8 zeigt eine Draufsicht von oben.

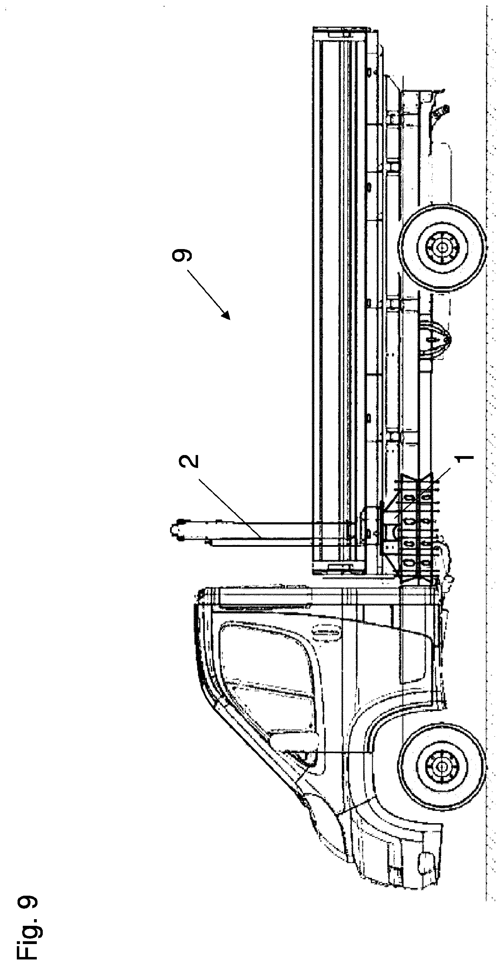

Figur 9 zeigt ein Kraftfahrzeug 9 mit einem über die Montagevorrichtung 1 montiertem Ladekran 2.

## Patentansprüche

1. Montagevorrichtung (1) für eine Abstützung eines Ladekrans oder einen Ladekran (2), über welche die Abstützung oder der Ladekran an einem ersten Fahrgestelllängsträger (10) und einem zweiten Fahrgestelllängsträger (11) eines Kraftfahrzeuges (9) montierbar ist, wobei die Montagevorrichtung (1) wenigstens eine Querstrebe (5, 6) aufweist, **dadurch gekennzeichnet, dass** die Montagevorrichtung (1) eine erste Halteklammer (3) und eine zweite Halteklammer (4) aufweist, die durch die wenigstens eine Querstrebe (5, 6) miteinander verbunden sind, wobei die erste Halteklammer (3) dazu ausgebildet ist, im Montagezustand den ersten Fahrgestelllängsträger (1) zu umgreifen und die zweite Halteklammer (4) dazu ausgebildet ist, im Montagezustand den zweiten Fahrgestelllängsträger (11) zu umgreifen.

2. Montagevorrichtung nach Anspruch 1, wobei die wenigstens eine Querstreben (5, 6) als Hohlräume aufweisendes Hohlprofil ausgebildet ist.

3. Montagevorrichtung nach Anspruch 2, wobei wenigstens zwei Querstreben (5, 6) vorgesehen sind und der Hohlraum der einen der wenigstens zwei Querstreben (5, 6) im Bereich der ersten Halteklammer (3) offen ist und der Hohlraum der anderen der wenigstens zwei Querstreben (5, 6) im Bereich der zweiten Halteklammer (4) offen ist.

4. Montagevorrichtung nach Anspruch 2 oder 3, wobei im Hohlraume der wenigstens einen Querstrebe (5, 6) ein Ausleger verschiebbar gelagert ist.

5. Montagevorrichtung nach wenigstens einem der Ansprüche 1 bis 4, wobei an der wenigstens einen Querstreben (5, 6) zumindest eine Aufnahmeplatte (8) für eine Kransäule des Ladekrans (2) angeordnet ist.

6. Montagevorrichtung nach wenigstens einem der Ansprüche 1 bis 5, wobei die erste und die zweite Halteklammer (3, 4) jeweils einen Oberteil (31, 41) und einen damit verbundenen Unterteil (32, 42) aufweisen.

7. Montagevorrichtung nach Anspruch 6, wobei die Oberteile (31, 41) und die Unterteile (32, 42) der ersten und der zweiten Halteklammer (3, 4) an jenen Seiten der ersten und der zweiten Halteklammer (3, 4) miteinander verbunden sind, die voneinander abgewandt sind.

8. Montagevorrichtung nach Anspruch 6 oder 7, wobei die Oberteile (31, 41) und die Unterteile (32, 42) der ersten und der zweiten Halteklammer (3, 4) an jenen Seiten der ersten und der zweiten Halteklammer (3, 4) miteinander verbunden sind, die einander zugewandt sind.

9. Montagevorrichtung nach wenigstens einem der Ansprüche 1 bis 8, wobei die wenigstens eine Querstrebe (5, 6) über eine lösbare Verbindung, vorzugsweise eine Klemmverbindung, an der ersten und der zweiten Halteklammer (3, 4) befestigt ist.

10. Kraftfahrzeug (9) mit einem ersten Fahrgestelllängsträger (10) und einem zweiten Fahrgestelllängsträger (11), und einer Montagevorrichtung (1) nach wenigstens einem der Ansprüche 1 bis 9, wobei die erste Halteklammer (3) mit dem ersten Fahrgestelllängsträger (10) und die zweite Halteklammer (4) mit dem zweiten Fahrgestelllängsträger (11) verbunden ist.

11. Kraftfahrzeug nach Anspruch 10, wobei die Höhe der Halteklammern (3, 4) im Wesentlichen der Höhe der Fahrgestelllängsträgern (10, 11) entspricht.

12. Kraftfahrzeug nach Anspruch 10 oder 11, wobei an der wenigstens einen Querstrebe (5, 6) der Montagevorrichtung (1) ein Ladekran (2) montiert ist.

## Claims

1. Mounting device (1) for a support of a loading crane or for a loading crane (2), by means of which the support or the loading crane can be mounted on a first longitudinal chassis beam (10) and a second longitudinal chassis beam (11) of a motor vehicle (9), wherein the mounting device (1) has at least one cross-member (5, 6), **characterized in that** the mounting device (1) has a first retaining bracket (3) and a second retaining bracket (4), which are connected to each other by the at least one cross-member (5, 6), wherein the first retaining bracket (3) is formed to engage around the first longitudinal chassis beam (10) in the mounted state and the second retaining bracket (4) is formed to engage around the second longitudinal chassis beam (11) in the mounted state.

2. Mounting device according to claim 1, wherein the at least one cross-member (5, 6) is formed as a hollow profile having hollow spaces.

3. Mounting device according to claim 2, wherein at least two cross-members (5, 6) are provided and the hollow space of one of the at least two cross-members (5, 6) is open in the area of the first retaining bracket (3) and the hollow space of the other of the at least two cross-members (5, 6) is open in the area of the second retaining bracket (4).

4. Mounting device according to claim 2 or 3, wherein an outrigger is moveably mounted in the hollow space of the at least one cross-member (5, 6).

5. Mounting device according to at least one of claims 1 to 4, wherein at least one mounting plate (8) for a crane column of the loading crane (2) is arranged on the at least one cross-member (5, 6).

6. Mounting device according to at least one of claims 1 to 5, wherein the first and second retaining brackets (3, 4) each have an upper part (31, 41) and a lower part (32, 42) connected thereto.

7. Mounting device according to claim 6, wherein the upper parts (31, 41) and the lower parts (32, 42) of the first and second retaining brackets (3, 4) are connected to each other on those sides of the first and second retaining brackets (3, 4) which are facing away from each other.

8. Mounting device according to claim 6 or 7, wherein the upper parts (31, 41) and the lower parts (32, 42) of the first and second retaining brackets (3, 4) are connected to each other on those sides of the first and second retaining brackets (3, 4) which are facing each other.

9. Mounting device according to at least one of claims 1 to 8, wherein the at least one cross-member (5, 6) is fastened to the first and second retaining brackets (3, 4) by means of a detachable connection, preferably a clamping connection.

10. Motor vehicle (9) with a first longitudinal chassis beam (10) and a second longitudinal chassis beam (11), and a mounting device (1) according to at least one of claims 1 to 9, wherein the first retaining bracket (3) is connected to the first longitudinal chassis beam (10) and the second retaining bracket (4) is connected to the second longitudinal chassis beam (11).

11. Motor vehicle according to claim 10, wherein the height of the retaining brackets (3, 4) substantially corresponds to the height of the longitudinal chassis beams (10, 11).

12. Motor vehicle according to claim 10 or 11, wherein a loading crane (2) is mounted on the at least one cross-member (5, 6) of the mounting device (1).

## Revendications

1. Dispositif de montage (1) pour un support d'une grue de chargement ou pour une grue de chargement (2), par l'intermédiaire duquel le support ou la grue de chargement peuvent être montés à un premier support longitudinal de châssis (10) et un deuxième support longitudinal de châssis (11) d'un véhicule automobile (9), dans lequel le dispositif de montage (1) présente au moins une entretoise transversale (5, 6), **caractérisé en ce que** le dispositif de montage (1) présente un premier étrier de retenue (3) et un deuxième étrier de retenue (4), qui sont reliés l'un à l'autre par l'au moins une entretoise transversale (5, 6), dans lequel le premier étrier de retenue (3) est réalisé pour entourer, à l'état monté, le premier support longitudinal de châssis (1), et le deuxième étrier de retenue (4) est réalisé pour entourer, à l'état monté, le deuxième support longitudinal de châssis (11).

2. Dispositif de montage selon la revendication 1, dans lequel l'au moins une entretoise transversale (5, 6) est réalisée sous la forme d'un profilé creux présentant des espaces creux.

3. Dispositif de montage selon la revendication 2, dans lequel au moins deux entretoises transversales (5, 6) sont prévues, et l'espace creux de l'une des au moins deux entretoises transversales (5, 6) est ouvert dans la zone du premier étrier de retenue (3), et l'espace creux de l'autre des au moins deux entretoises transversales (5, 6) est ouvert dans la zone du deuxième étrier de retenue (4).

4. Dispositif de montage selon la revendication 2 ou 3, dans lequel un bras stabilisateur est agencée de manière à pouvoir coulisser dans l'espace creux de l'au moins une entretoise transversale (5, 6).

5. Dispositif de montage selon au moins l'une quelconque des revendications 1 à 4, dans lequel au moins une plaque de logement (8) pour un mât de grue de la grue de chargement (2) est disposée à l'au moins une entretoise transversale (5, 6).

6. Dispositif de montage selon au moins l'une quelconque des revendications 1 à 5, dans lequel le premier et le deuxième étrier de retenue (3, 4) présentent chacun une partie supérieure (31, 41) et une partie inférieure (32, 42) reliée à celle-ci.

7. Dispositif de montage selon la revendication 6, dans lequel les parties supérieures (31, 41) et les parties inférieures (32, 42) du premier et du deuxième étrier de retenue (3, 4) sont reliées entre elles aux côtés du premier et du deuxième étrier de retenue (3, 4), qui sont opposés les uns aux autres.

8. Dispositif de montage selon la revendication 6 ou 7, dans lequel les parties supérieures (31, 41) et les parties inférieures (32, 42) du premier et du deuxième étrier de retenue (3, 4) sont reliées entre elles aux côtés du premier et du deuxième étrier de retenue (3, 4), qui sont tournés les uns vers les autres.

9. Dispositif de montage selon au moins l'une quelconque des revendications 1 à 8, dans lequel l'au moins une entretoise transversale (5, 6) est fixée par l'intermédiaire d'une liaison amovible, de préférence une liaison par serrage, au premier et au deuxième étrier de retenue (3, 4).

10. Véhicule automobile (9) avec un premier support longitudinal de châssis (10) et un deuxième support longitudinal de châssis (11), et un dispositif de montage (1) selon au moins l'une quelconque des revendications 1 à 9, dans lequel le premier étrier de retenue (3) est relié au premier support longitudinal de châssis (10) et le deuxième étrier de retenue (4) est relié au deuxième support longitudinal de châssis (11).

11. Véhicule automobile selon la revendication 10, dans lequel la hauteur des étriers de retenue (3, 4) correspond sensiblement à la hauteur des supports longitudinaux de châssis (10, 11).

12. Véhicule automobile selon la revendication 10 ou 11, dans lequel une grue de chargement (2) est montée à l'au moins une entretoise transversale (5, 6) du dispositif de montage (1).
